# EUROPEAN PATENT SPECIFICATION

(11) **EP 1 167 093 B1**
(45) Date of publication and mention of the grant of the patent: **21.01.2004**
(21) Application number: 01114030.8
(22) Date of filing: 08.06.2001
(51) Int. Cl.: B60G 17/015, B60G 17/08, B60G 3/01, B62D 17/00, B62D 6/00, B62D 7/00, B60T 8/00

(54) **Electronically controlled suspension for motor vehicles**
Elektronisch gesteuerte Aufhängung für Kraftfahrzeuge
Suspension à commande électronique pour véhicules automobiles

(30) Priority: 27.06.2000 IT TO000627
(43) Date of publication of application: 02.01.2002
(73) Proprietor: C.R.F. Società Consortile per Azioni, 10043 Orbassano (TO) (IT)
(72) Inventor: Perello, Gian Luigi, 10019 Strambino, Torino (IT); Sandri, Silvano, 10037 Saluzzo, Cuneo (IT)
(74) Representative: Marchitelli, Mauro

(56) References cited:
- FR-A- 2 515 580
- GB-A- 453 808
- GB-A- 658 291
- US-A- 4 741 516
- US-A- 5 143 400
- US-A- 5 438 515
- PATENT ABSTRACTS OF JAPAN vol. 015, no. 298 (M-1141), 29 July 1991 (1991-07-29) & JP 03 109139 A (MAZDA MOTOR CORP), 9 May 1991 (1991-05-09)

## Description

This invention relates to an independent wheel suspension for motor vehicles according to the preamble of claim 1, which is known from FR-A-2 525 580. This document discloses a damping device including a cylinder filled with damping oil. A rod carrying a piston extends logitudinally through the cylinder and is fixed at both ends to the structure of the vehicle.

US-A-5 143 400 discloses an active toe adjustment apparatus including a mechanical screw actuator, a micro-stepping motor with optical encoder, a computer with control strategy chip and a toe angle sensing device.

A common problem for all suspension systems for steering wheels of motor vehicles is avoiding that the suspension movement of the wheel induces undesired steering. The cinematic solutions for controlling the variations of the toe-in angle of the wheel induced by the suspension movement are generally rather complex and costly, both in terms of the number of components and the complexity of the vehicle assembly operations. An additional problem consists in that the suspensions permit a better control of the toe-in variation induced by the suspension movement (for example, transversal quadrilateral suspensions) are often very cumbersome in the transversal direction and cause an increase in transversal dimensions of the vehicle, especially in the case of vehicles with engine arranged transversally.

Purpose of this invention is to provide a suspension for motor vehicles which solves said problems. An additional purpose of this invention is to provide a suspension system which consists of a reduced number of components and which can totally be pre-assembled off the vehicle assembly line.

According to this invention, these purposes are attained by means of a suspension which characteristics are described in the main claim.

This invention will be better explained by the following detailed descriptions with reference to the accompanying drawings, given as non-limiting example, wherein:
figure 1 is a schematic perspective view of a suspension according to this invention,
figures 2, 3 and 4 are schematic views according to arrows II, III and IV in figure 1 respectively, and
figure 5 is a schematic cross-section according to line V-V in figure 1.

With reference to the figures, numeral 10 indicates an independent wheel suspension for steering wheels of a motor vehicle. Suspension 10 comprises a wheel support 12 on which a wheel 14 turns.

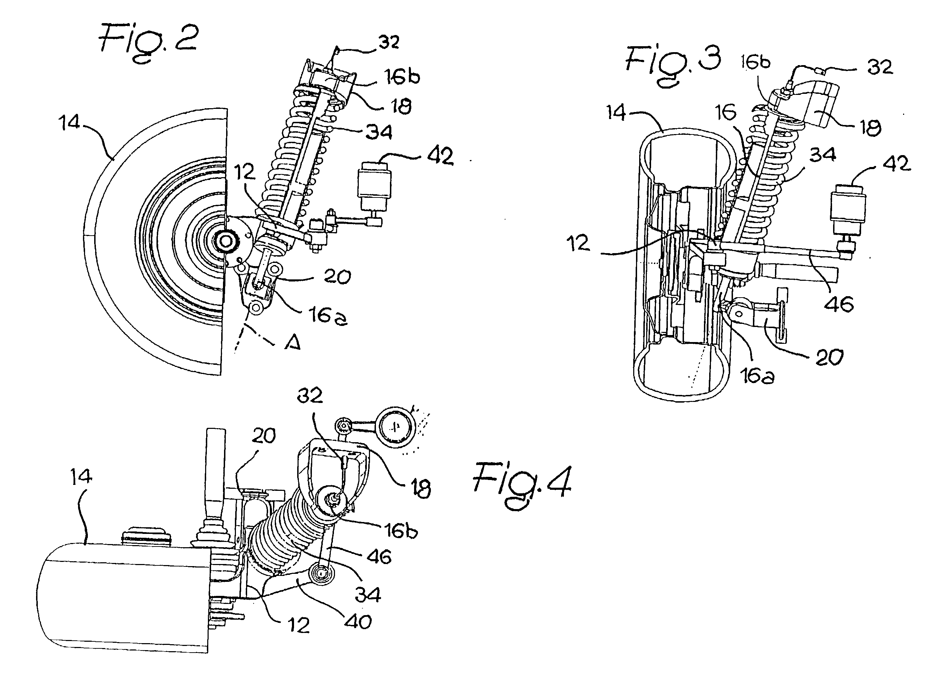

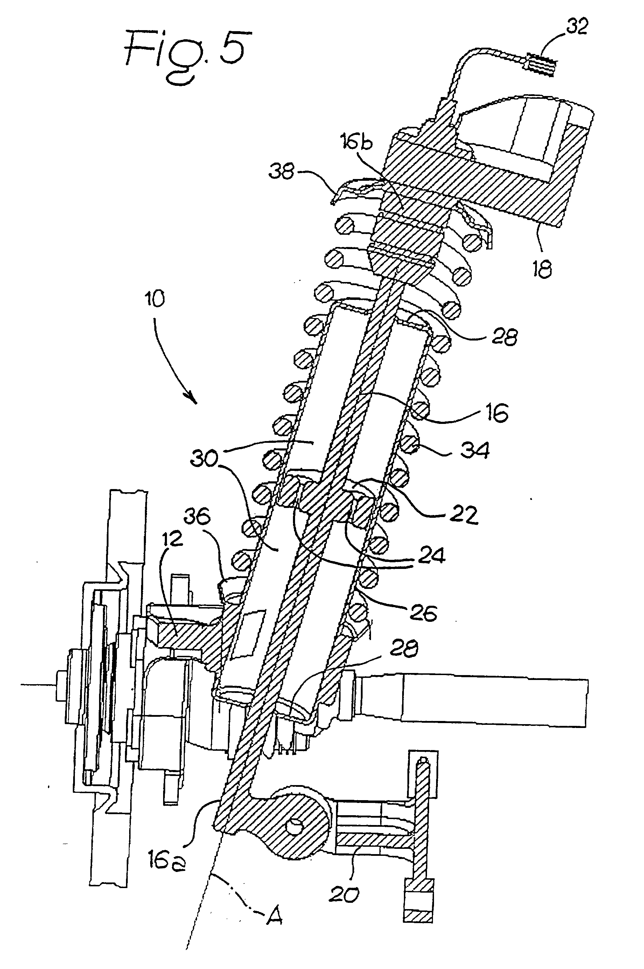

As shown in greater detail in figure 5, suspension 10 comprises a steering arm 16, preferably straight, with fastening elements 18, 20 connected to the respective extremities destined to be fastened to the body of a motor vehicle (not illustrated). When suspension 10 is fitted on a motor vehicle, the steering arm 16 is fixed with respect to the body of the motor vehicle. In the assembled condition on the motor vehicle, the longitudinal axis A of the steering arm 16 is slanted with respect to a vertical axis. The axis A is slanted both on a longitudinal vertical plane and on a transversal vertical plane. As shown in figures 2, 3 and 4, the lower extremity 16a of the steering arm 16 is moved forward and outwards with respect to the upper extremity 16b.

With reference to figure 5, a piston 22 is fastened to the steering arm 16 and presents one or more longitudinal apertures 24 for the passage of damping fluid. The wheel support 12 is fastened to a tubular element 26 arranged coaxially with respect to the steering arm 16 and slides with respect to the latter in the longitudinal direction A. The tubular element 26 presents closed extremities 28, which engage and hold the steering arm 16. The tubular element 26 defines two chambers 30, arranged on opposite sides with respect to the piston 22, and filled with a damping fluid. Consequently, the tubular element 26 forms the external casing of a shock absorber. The wheel support 12, which is integral with the tubular element 26 is free to move the suspension in the direction of axis and a steering movement consisting of an oscillation around the axis A. According to a particularly advantageous form of embodiment of this invention, the damping characteristics of the shock absorber formed by the steering arm 16, the piston 22 and the tubular casing 26 can be controlled electronically. This can be obtained, in a way which is known, using a damping fluid with magnetic-rheological qualities or by arranging electronically controlled valves in the fluid passage apertures 24. In figure 5, numeral 32 schematically indicates an electric connector for providing electric damping characteristic control signals to the shock absorber.

An elastic element 34, consisting for example of a compressed coil spring, is arranged in coaxial position around the tubular element 26. The lower extremity of the elastic element 34 rests on a plate 36 fastened to the wheel support 12. The upper extremity of the elastic element 34 rests on a plate 38 fastened to the upper extremity 16b of the steering arm 16.

The wheel support 12 is fastened to a steering lever 40, which is operated by an electric actuator 42, destined to be fastened to the body of the motor vehicle. In the form of embodiment illustrated in the figures, the actuator 42 is rotary. A linkage 44, controlling the steering lever 40 via a connecting rod 46, is connected to the output shaft of the actuator. The electric actuator 42 is capable of controlling the rotation movement of the wheel support 12 around axis A, which amplitude is correlated to the rotation of the steering wheel of the motor vehicle. Each steering wheel is equipped with an electric actuator 42, reason for which no mechanical interconnection between the two steering wheels on the two sides of the vehicle is required.

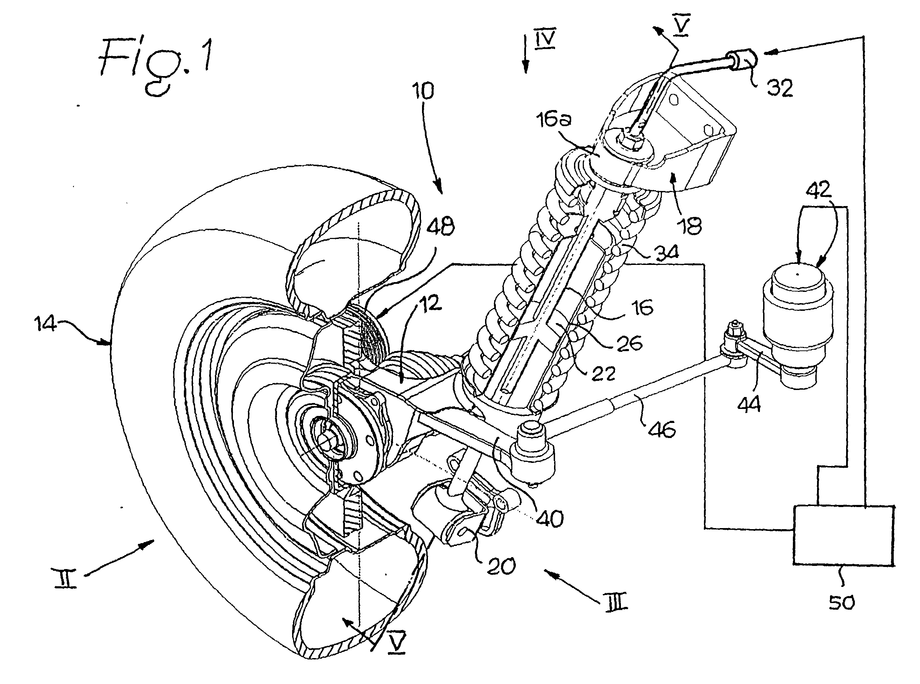

The suspension according to this invention is preferably equipped with an electrically controlled braking device 48, which can be of any known type. As schematically illustrated in figure 1, an electronic control unit 50 sends electric control signals to the electric actuator 42, to the shock absorber 16, 26 and to the electromechanical brake 48.

The suspension according to this invention can be completely pre-assembled off the vehicle assembly line. The entire suspension requires only two fastening points to the body of the motor vehicle, consisting of fastening elements 18, 20. The suspension unit is, consequently, characterized by extreme assembly simplicity and very reduced size in the transversal direction, thanks to the absence of suspension rocker arms.

The suspension movement of the wheel 14 with respect to the body of the vehicle is a straight movement along the direction of the slanted axis A. Considering that the direction of movement of the suspension is slanted with respect to the suspension of the wheel, if the actuator 42 remained still during the suspension movement of the wheel, the wheel toe-in angle would vary, induced by the suspension movement of the wheel. This toe-in angle variation would produce undesired steering of the wheel. In order to overcome this problem, according to this invention, the electronic control unit 50 is arranged to control the electric actuator 42 so to correct the undesired toe-in angle variations related to the movement of the suspension. For this purpose, the electronic control unit 50 receives a signal indicating the position of the wheel support 12 with respect to axis A and, according to this function, computes the correction angle required to compensate for the change in the toe-in angle, whereby controlling the electric actuator 42 so to impose a steering angle equal and opposite to the movement of the wheel support 12 along axis A to the wheel support 12.

Furthermore, the electronic control unit 50 can be arranged to receive signals indicating the longitudinal and transversal acceleration of the vehicle and to control the damping characteristics of the shock absorber according to said signals, to control rolling and pitch of the vehicle. Furthermore, the electronic control unit 50 controls the braking device 48 and the steering actuator 42 according to the braking and steering controls of the vehicle driver by means of the brake pedal and the steering wheel.

The suspension according to this invention can be used without substantial changes for front and rear wheels and for both driving and idle wheels. The suspension according to this invention permits setting steering control in an individual way on the individual wheels for obtaining ideal steering from a cinematic point of view, without the constraints deriving from the steering mechanism. Also the shock absorber damping and the braking control strategies can be controlled individually on each wheel. In addition to a particularly reduced transversal size, the suspension according to this invention is also characterized by reduced size in the vertical direction, because the vertical size of the suspension depends only on the maximum amplitude of the suspension and is not conditioned by the cinematic structure of the wheel suspension mechanism.

## Claims

1. Independent wheel suspension for motor vehicles comprising: a steering arm (16) having a longitudinal axis (A) adapted to be connected at each end to the body of a motor vehicle; a piston (22) fastened to the steering arm and comprising at least one aperture for the passage of damping fluid; a tubular element (26) arranged coaxially and slidably with respect to the steering arm (16) and defining two chambers (30) arranged on opposite sides of the piston (22) and filled with a damping fluid; a wheel support (12) fastened to the tubular element (26) and having a suspension movement in the direction of axis (A) and a steering movement around axis (A); an elastic element (34) arranged in a coaxial position around the tubular element (26) and adapted to act between the wheel support and the body of a motor vehicle;
**characterised in that**
the wheel support (12) is fastened to a steering lever (40), which is operated by an electric actuator (42) controlled by an electronic control unit (50) arranged to correct the steering movements induced by the suspension movement;
the upper extremity of the elastic element (34) rests on a plate (38) fastened to the upper extremity (16b) of the steering arm (16);
and **in that** upper and lower support members (18,20) comprising fastening elements destined to be fastened to the body of a motor vehicle are connected to the respective upper and lower extremities (16b,16a) of the steering arm (16) such that in the assembled condition on the motor vehicle, the longitudinal axis (A) of the steering arm is slanted with respect to a vertical axis.

2. Suspension according to claim 1, **characterized in that** said shock absorber is equipped with electrically controlled devices for changing the damping characteristics.

3. Suspension according to claim 1, **characterized in that** it comprises an electrically controlled braking device (48).

## Patentansprüche

1. Einzelradaufhängung für Kraftfahrzeuge umfassend:
- einen Lenkerarm (16) mit einer Längsachse (A), der an jedem Ende zur Verbindung mit der Karosserie eines Kraftfahrzeugs geeignet ist;
- einen Kolben (22), der am Lenkerarm befestigt ist und zumindest eine Öffnung für den Durchfluss von Dämpfungsfluid umfasst;
- ein rohrförmiges Element (26), das koaxial und verschiebbar bezüglich des Lenkerarms (16) angeordnet ist und zwei Kammern (30) abgrenzt, die auf gegenüberliegenden Seiten des Kolbens (22) angeordnet und mit einem Dämpfungsfluid gefüllt sind;
- ein Radlager (12), das an dem rohrförmigen Element (26) befestigt ist und eine Federbewegung in Richtung der Achse (A) und eine Lenkbewegung um die Achse (A) aufweist;
- ein Federelement (34), das in einer koaxialen Stellung um das rohrförmige Element (26) angeordnet und zur Wirkung zwischen dem Radlager und der Karosserie eines Kraftfahrzeugs geeignet ist;
**dadurch gekennzeichnet, dass**
- das Radlager (12) an einem Lenkhebel (40) befestigt ist, der durch ein elektrisches Betätigungselement (42) betätigt wird, das von einer elektronischen Steuereinheit (50) gesteuert wird, die zur Korrektur der durch die Federbewegung erzeugten Lenkbewegungen angeordnet ist;
- das obere Ende des Federelementes (34) auf einer Platte (38) ruht, die am oberen Ende (16b) des Lenkerarms (16) befestigt ist; und dass
- obere und untere Tragelemente (18, 20), die zur Befestigung an der Karosserie eines Kraftfahrzeugs bestimmte Befestigungselemente umfassen, mit dem jeweiligen oberen und unteren Ende (16b, 16a) des Lenkerarms (16) verbunden sind, so dass die Längsachse (A) des Lenkerarms im montierten Zustand am Kraftfahrzeug bezüglich einer Vertikalachse schräg gestellt ist.

2. Aufhängung gemäß Anspruch 1, **dadurch gekennzeichnet, dass** der Stoßdämpfer mit elektrisch gesteuerten Vorrichtungen zum Ändern der Dämpfungseigenschaften ausgerüstet ist.

3. Aufhängung gemäß Anspruch 1, **dadurch gekennzeichnet, dass** sie eine elektrisch gesteuerte Bremsvorrichtung (48) umfasst.

## Revendications

1. Suspension à roue indépendante pour véhicules à moteur, comprenant : un bras de direction (16) ayant un axe longitudinal (A) adapté à être connecté à chaque extrémité à la carrosserie d'un véhicule à moteur ; un piston (22) attaché au bras de direction et comprenant au moins une ouverture pour le passage d'un fluide d'amortissement ; un élément tubulaire (26) agencé coaxialement et en coulissement par rapport au bras de direction (16) et définissant deux chambres (30) agencées sur des côtés opposés du piston (22) et remplies avec un fluide d'amortissement ; un support de roue (12) fixé à l'élément tubulaire (26) et ayant un mouvement de suspension dans la direction de l'axe (A) et un mouvement de direction autour de l'axe (A) ; un élément élastique (34) agencé dans une position coaxiale autour de l'élément tubulaire (26) et adapté à agir entre le support de roue et la carrosserie d'un véhicule à moteur ;
**caractérisée en ce que** :
le support de roue (12) est fixé à un levier de direction (40), lequel est actionné par un actionneur électrique (42) commandé par une unité de commande électronique (50) agencée pour corriger les mouvements de direction induits par les mouvements de la suspension ;
l'extrémité supérieure de l'élément élastique (34) repose sur une plaque (38) fixé sur l'extrémité supérieure (16b) du bras de direction (16) ;
et des éléments de support supérieur et inférieur (18, 20) comprenant des éléments de fixation destinés à être fixés sur la carrosserie d'un véhicule à moteur sont connectés aux extrémités respectives supérieure et inférieure (16b, 16a) du bras de direction (16) de telle façon que dans la condition assemblée sur le véhicule à moteur, l'axe longitudinal (A) du bras de direction est en oblique par rapport à un axe vertical.

2. Suspension selon la revendication 1, **caractérisée en ce que** ledit dispositif d'absorption antichoc est équipé de dispositifs commandés par voie électrique pour changer les caractéristiques d'amortissement.

3. Suspension selon la revendication 1, **caractérisée en ce qu'**elle comprend un dispositif de freinage commandé par voie électrique (48).
